# EUROPEAN PATENT SPECIFICATION

(11) **EP 1 512 974 B1**
(45) Date of publication and mention of the grant of the patent: **23.10.2013**
(21) Application number: 03736187.0
(22) Date of filing: 12.06.2003
(51) Int. Cl.: G01N 35/00, G01N 35/02

(54) **AUTOMATIC ANALYSIS DEVICE, MEASUREMENT DEVICE, AND MEASUREMENT RESULT MANAGEMENT METHOD**
AUTOMATISCHE ANALYSEVORRICHTUNG, MESSVORRICHTUNG UND VERFAHREN ZUR VERWALTUNG VON MESSERGEBNISSEN
DISPOSITIF D'ANALYSE AUTOMATIQUE, DISPOSITIF DE MESURE, ET PROCEDE DE GESTION DE RESULTATS DE MESURE

(30) Priority: 12.06.2002 JP 2002170821
(43) Date of publication of application: 09.03.2005
(73) Proprietor: Kabushiki Kaisha Toshiba, Tokyo 105-8001 (JP)
(72) Inventor: SHINOHARA, Hiroo, Nishinasunomachi, Nasu-gun, Tochigi 329- (JP)
(74) Representative: Granleese, Rhian Jane
(86) International application number: PCT/JP2003/007499
(87) International publication number: WO 2003/107012

(56) References cited:
- EP-A2- 1 107 159
- JP-B2- 3 052 020
- US-A- 4 980 292
- US-A- 5 730 939
- DATABASE EPODOC EUROPEAN PATENT OFFICE, THE HAGUE, NL; JP01219564 1 September 1989 (1989-09-01), XP002566259 -& JP 01 219564 A (TOSHIBA CORP) 1 September 1989 (1989-09-01)

## Description

### Technical Field

The present invention relates to an automatic analyzer and a measuring device for measuring components, concentrations and so on of specific materials contained in a sample (analyte) and a method for controlling the measurements.

### Background Art

Automatic analyzers measure the concentration of specified materials contained in samples taken from analytes, such as blood or urine, qualitatively or quantitatively. The sample taken from the analyte is kept in a sample container in a sample storage space called a sample disk. The sample aspirated from the sample container is pipetted into a reaction cuvette. Various kinds of reagents are kept in reagent containers in a reagent storage space called a reagent disk. A reagent corresponding to a measurement assay is aspirated from the container and pipetted into a specific reaction cuvette. The sample reacts with the reagent. The reaction solution is measured with a photometer or the like. The measurement reflects the concentration of the specific component.

Multiple measurement assays are generally designated for an identical analyte. A sample taken from the same analyte is divided into reaction cuvettes of the same number as that of the designated measurement assays. A reagent corresponding to each measurement assay is pipetted into each reaction cuvette.

For example, typical examples of measurement assays for a liver function examination include "Glutamic Pyruvic Transaminase (GPT)" and "Glutamic Oxaloacetic Transaminase (GOT)." The blood taken from an analyte is reacted with a reagent for the "GOT." The reaction solution is measured with a photometer. The measurement or the analysis of the measurement indicates a quantitative concentration of the "GOT." The digitized or symbolized measurement is displayed on a screen or printed on paper. A clinical technologist makes a report for a doctor on the basis of the displayed or printed measurement. The report is made for each analyte. The doctor grasps the morbid condition of the analyte on the basis of the report.

As is well known, measurement is made through a measuring process according to measurement assays. The measuring process includes many measuring steps such as sample aspiration, sample pipetting, reagent aspiration, reagent pipetting, stirring, reaction, photometry, reaction-solution disposal, detergent pipetting, cleaning, pure-water pipetting, cleaning, and pure-water disposal. Increasing the measuring steps increases the probability of the occurrence of anomaly in any of the steps.

Anomaly causes an error in the measurement. One of the most important problems is that a doctor may recognize that the measurement that essentially contains an error as measurement containing no error and make a diagnosis. When anomaly is detected in one step in the measuring process, the measurement obtained through the measuring process is always associated with an error code. On the other hand, when no error is detected in all the steps in the measuring process, the measurement obtained through the measuring process is not associated with an error code. Typically, a doctor recognizes that the measurement associated with an error code has an error and the measurement not associated with an error code has no error.

In practice, the measurement not associated with an error code may have an error. Such a situation may be caused by various external perturbations such as the unstable operation of an anomaly-detecting sensor, low detection accuracy of a sensor, and a decrease in detection accuracy due to the degradation of a sensor.

Assume that an anomaly of a decrease in the luminous intensity of a photometer was detected in one measuring step, while the anomaly of a decrease in the luminous intensity of a photometer was not detected in the other measuring steps before and after the measuring step. In this case, although a measurement obtained in one measuring step is given an error code, measurements obtained in the other measuring steps are given no error code. However, since there is no possibility of recovering the decrease in the luminous intensity of the photometer by itself, the measurements obtained in the other measuring steps have a high probability of having an error.

Therefore, clinical technologists are burdened with the work of picking up a measurement having a high possibility of having an error in spite of having no error code, by checking a measurement list against an error code list. The work will become a burden to the clinical technologists. The difference in experience and technique of the clinical technologists will make the accuracy of the work unstable.

US 4 980 292 and JP 01 219564 relate to clinical analysis systems which can automatically detect a type of fault.

### Disclosure of Invention

It is an object of the present invention to improve measurement-error control accuracy.

The present invention provides an automatic analyser as recited in claim 1.

### Brief Description of Drawings

FIG. 1 is a perspective view of a measuring section of an automatic analyzer according to an embodiment of the present invention;
FIG. 2 is a schematic block diagram of the automatic analyzer according to the embodiment of the invention;
FIG. 3 is a flowchart for a measuring procedure according to the embodiment of the invention;
FIG. 4 shows the structure of a photometer section according to the embodiment of the invention;
FIG. 5 shows the structure of a sampling monitor method according to the embodiment of the invention;
FIG. 6 is an error-code association table stored in a table memory section of FIG. 2;
FIG. 7 shows a method for updating the error-code association table of FIG. 6;
FIGS. 8A and 8B show examples of a measurement list displayed in a display of FIG. 2; and
FIG. 9 shows the procedure of associating error codes by associating sections 53 and 54 of FIG. 2.

### Best Mode for Carrying out the Invention

An embodiment of the present invention will be described hereinafter with reference to the drawings. The measurement of a sample taken from an analyte is obtained through a measuring process corresponding to each measurement assay. The measuring process includes multiple measuring steps such as sample aspiration, sample pipetting, reagent aspiration, reagent pipetting, stirring, reaction, photometry, reaction-solution disposal, detergent pipetting, cleaning, pure-water pipetting, cleaning, and pure-water disposal. The reagent is properly used depending on the measurement assay. The step of aspirating a first sample taken from a first analyte is discriminated from the step of pipetting a second sample taken from a second analyte. The step of aspirating a first reagent is discriminated from the step of pipetting a second reagent.

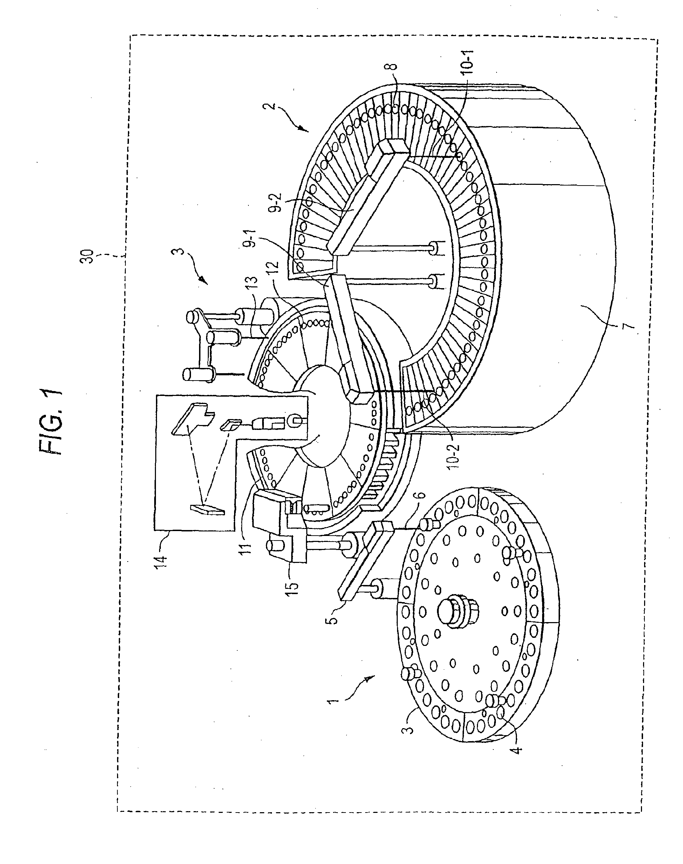

A measuring section 30 shown in FIG. 1 is equipped with a plurality of components corresponding to the respective measuring steps. The components are arranged systematically in the order of the measuring steps. The measuring section 30 includes a sample section 1. The sample section 1 stores a plurality of samples and selectively pipettes the samples into a plurality of reaction cuvettes 12. A reagent section 2 stores a plurality of reagents and pipettes the reagents into a plurality of reaction cuvettes 12. A reaction section 3 reacts the sample with the reagent put into the same cuvette and measure the reaction solution.

The sample section 1 includes a sample disk 3, a sample arm 5, and a sample probe 6. The sample disk 3 holds a plurality of sample containers 4. The sample containers 4 contain a plurality of samples, such as blood, taken from a plurality of analytes. The sample containers 4 are typically arranged concentrically. The sample disk 3 is rotatably supported. The rotation of the sample disk 3 is controlled so that any of the sample containers 4 stops in a sample-aspirating position.

The sample arm 5 is pivotally supported. The sample probe 6 is attached to the end of the sample arm 5. The sample probe 6 shuttles between the sample-aspirating position on the sample disk 3 and a sample dispensing position on a reaction disk 11. The sample in the sample container 4 in the sample-aspirating position is aspirated through the sample probe 6. The aspirated sample is pipetted into the reaction cuvette 12 in the sample dispensing position.

The reagent section 2 includes a reagent storage 7, reagent containers 8, a first reagent arm 9-1, a second reagent arm 9-2, a first reagent probe 10-1, and a second reagent probe 10-2. The reagent storage 7 is placed along with the reaction disk 11. The reagent storage 7 holds the reagent containers 8. The reagent containers 8 contain a plurality of reagents. The reagent containers 8 are typically arranged concentrically, nearly in the center of which the pivot shafts of the first and second reagent arms 9-1 and 9-2 are disposed. The first and second reagent arms 9-1 and 9-2 discharge the reagent aspirated from any reagent container 8 on the reagent storage 7 into a specified reaction cuvette 12 that has come in the first or second reagent-dispensing position with the rotation on the reaction disk 11. The reagent storage 7 may be rotatably supported, in which case the rotation of the reagent storage 7 is controlled so that any of the reagent containers 8 stops in the first or second reagent-aspirating position. The reagent in the reagent container 8 in the first or second reagent-aspirating position is aspirated through the first reagent probe 10-1 or the second reagent probe 10-2. The aspirated reagent is discharged into the reaction cuvette 12 in the first or second reagent-dispensing position.

The reaction section 3 includes the reaction disk 11. The reaction disk 11 includes a plurality of the reaction cuvettes 12 arranged in ring shape. The reaction disk 11 is rotatably supported. A stirring device 13, a cleaning unit 15, and a photometer section 14 are arranged around the outer circumference of the reaction disk 11. The reaction disk 11 is intermittently rotated in accordance with the measuring process.

The stirring device 13 includes, e.g., a pair of stirrers. The stirrer is made of, e.g., a piezoelectric vibrator. The stirrer vibrates by the application of an alternating voltage. The sample put into the reaction cuvette 12 is mixed with the reagent put into the same reaction cuvette 12 by the vibration and is stirred. The cleaning unit 15 includes a first cleaning nozzle, a second cleaning nozzle, and a drying nozzle. The first cleaning nozzle pipettes detergent into the reaction cuvette 12 that has come in a first cleaning position on the reaction disk 11. The second cleaning nozzle pipettes pure water into the reaction cuvette 12 which was cleaned with the detergent and which has come in a second cleaning position on the reaction disk 11. The drying nozzle dries the reaction cuvette 12 which was cleaned with the pure water and which has come in the drying position.

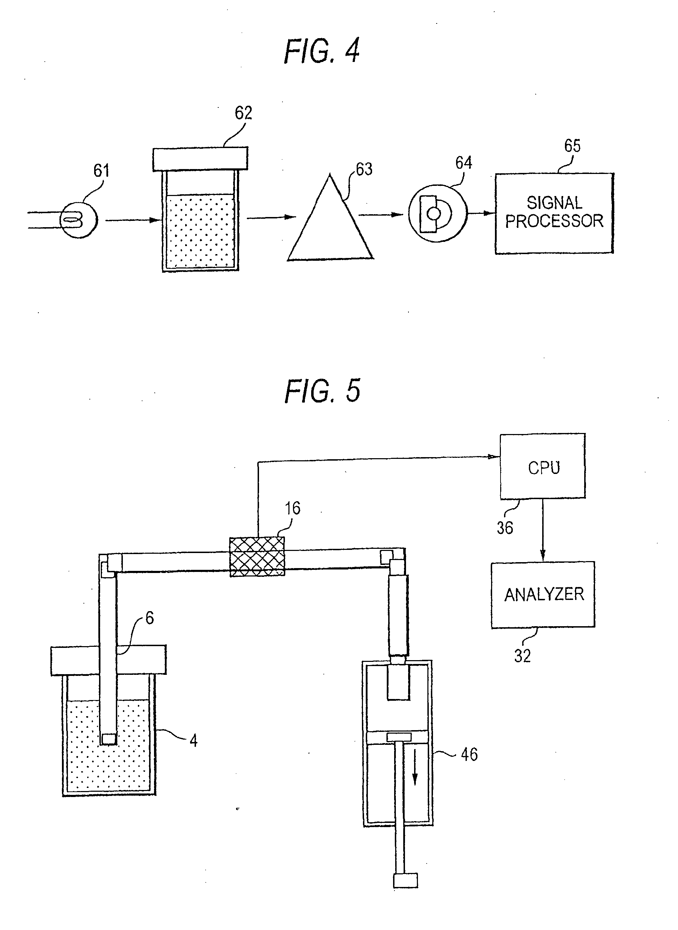

Referring to FIG. 4, the photometer section 14 includes a light-emitting section 61. The light-emitting section 61 irradiates a reaction solution 62 in the reaction cuvette 12 that has come in the photometer position on the reaction disk 11 with light. The intensity of light that has passed through the reaction solution 62 is measured by a photoreceiver 64 through a spectroscope 63. A signal processor 65 amplifies the output signal from the photoreceiver 64 and converts it to digital data (measurement data).

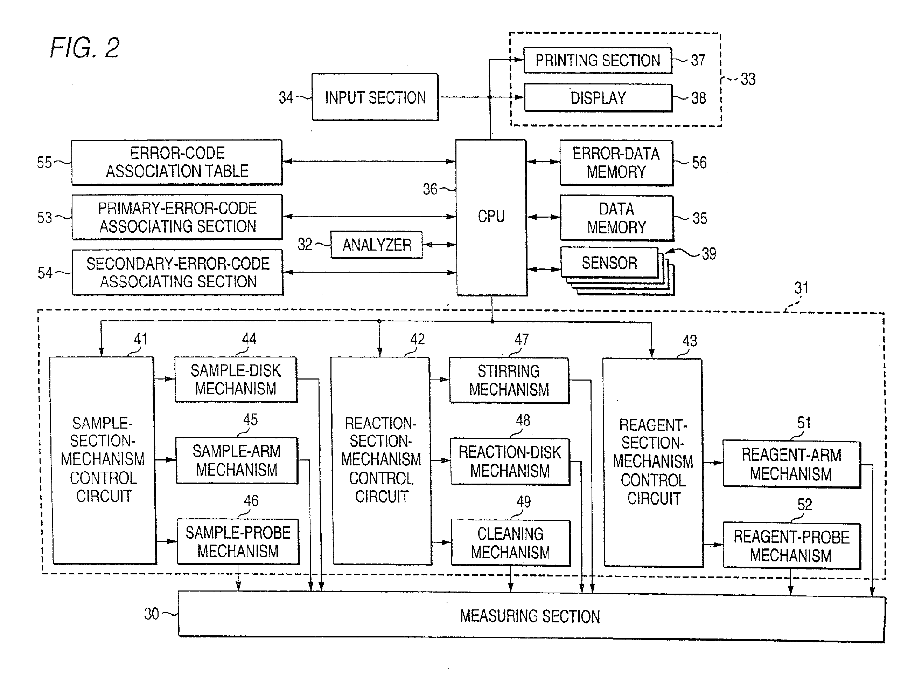

A controller 31 shown in FIG. 2 controls a measuring section 30. The controller 31 includes a sample-disk mechanism 44 for driving the rotation of the sample disk 3, a sample-arm mechanism 45 for driving the pivot and elevation of the sample arm 5, a sample-probe mechanism 46 for driving the aspiration and discharge of the sample probe 6, and a sample-section-mechanism control circuit 41 for controlling the mechanisms 44 to 46. The sample-probe mechanism 46 includes a sampling pump.

The controller 31 includes a reaction-disk mechanism 48 for driving the rotation of the reaction disk 11, a stirring mechanism 47 for driving the stirrers, a cleaning mechanism 49 for driving the cleaning unit 15, and a reaction-section-mechanism control circuit 42 for controlling the mechanisms 47 to 49.

The controller 31 includes a reagent-arm mechanism 51 for driving the pivot and elevation of the first and second reagent arms 9-1 and 9-2, a reagent-probe mechanism 52 for driving the aspiration and discharge of the first and second reagent probes 10-1 and 10-2, and a reagent-section-mechanism control circuit 43 for controlling the mechanisms.

The sample-section-mechanism control circuit 41, the reaction-section-mechanism control circuit 42, and the reagent-section-mechanism control circuit 43 are controlled by a CPU 36. The CPU 36 connects to a data memory 35 for storing the data (measurement data) outputted from the signal processor 65 together with a patient-identification number (sample-identification number) and a measuring-step identification number and an analyzer 32 for analyzing the stored data (measurement data) and outputting analysis data including concentration and a component ratio. The analysis data is stored in the data memory 35 together with the patient-identification number (sample-identification number) and the measuring-step identification number.

The CPU 36 connects to a plurality of sensors 39. The sensors 39 individually detect the occurrence of more than one kind of anomalies during the measuring process. The measuring process includes multiple measuring steps such as sample aspiration, sample pipetting, reagent aspiration, reagent pipetting, stirring, reaction, photometry, reaction-solution disposal, detergent pipetting, cleaning, pure-water pipetting, cleaning, and pure-water disposal. The sensors 39 individually detect the occurrence of anomalies in the measuring steps. Specifically, the sensors 39 detect a sample-aspiration anomaly, a sample-pipetting anomaly, a reagent-aspiration anomaly, a reagent-pipetting anomaly, reagent expiration, a stirring anomaly, a decrease in the temperature of constant-temperature water, a decrease in luminous intensity, a reaction-solution-disposal anomaly, a detergent-pipetting anomaly, a pure-water-pipetting anomaly, a pure-water-disposal anomaly, and a drying anomaly. The data about the anomalies detected by the sensors 39 is stored in an error data memory 56 through the CPU 36. The data on the anomalies includes a time code that indicates the time an anomaly was detected, a code for identifying a measuring process in which an anomaly was detected, a code for identifying a measuring step in which an anomaly was detected, and a code for identifying the kind of the anomaly.

A primary-error-code associating section 53 associates a primary error code with data on the measurement obtained through a measuring process in which an anomaly specified by anomaly data was detected. The measurement data associated with the primary error code is stored in the data memory 35. The primary error code may be associated with the analysis data in place of the measurement data. More than one kinds of primary error codes are selected in accordance with the kinds of the anomalies or the measuring steps in which the anomalies occurred. The primary error code indicates that the measurement associated therewith includes an error caused by an anomaly during the measuring process with a relatively high probability. In other words, the measurement associated with the primary error code includes an error caused by at least one anomaly arose during the measuring process.

A secondary-error-code associating section 54 associates a secondary error code with the data on a specified measurement selected on the basis of anomaly data from the plurality of measurements obtained through a measuring process in which no anomaly was detected,. The specified measurement is selected in accordance with an error-code association table stored in a memory 55.

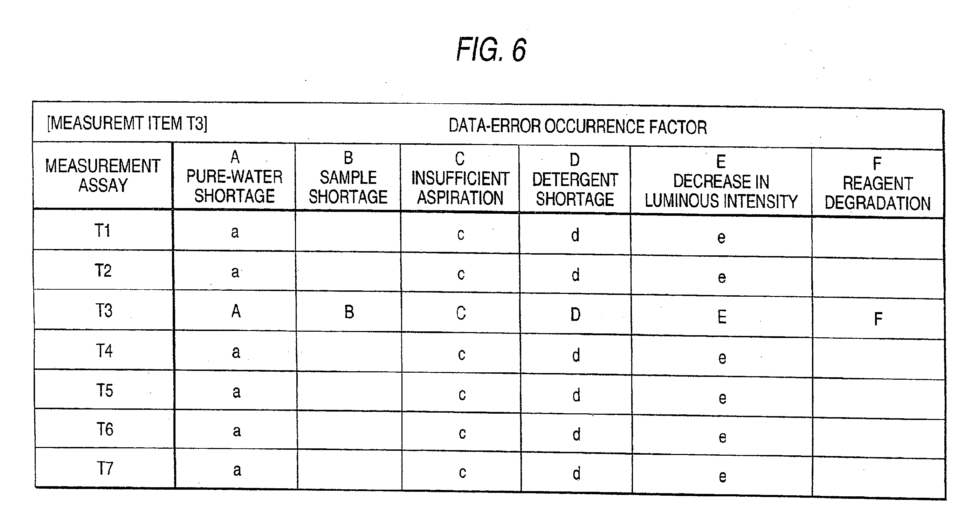

FIG. 6 shows an error-code association table for a measurement assay T3. The error-code association table for the measurement assay T3 associates measurement assays (T1, T2, and T4 to T7) that associate secondary error codes with the kinds of anomalies (A to F). For example, it mean that when an anomaly A of pure-water deficiency has occurred during a measuring process corresponding to the measurement assay T3, a secondary error code a is associated with the measurements of the other measurement assays (T1, t2, and T4 to T7).

The secondary error code indicates that there is a possibility that no anomaly occurred during the measuring process but the measurement associated therewith may contain an error related to an anomaly occurred during the other measuring process, in other words, it may contain an error with a relatively low probability.

An output section 33 includes a display 38 and a printing section 37. The display 38 displays the measurement list together with the primary error code and the secondary error code under the control of the CPU 36. The secondary error code is displayed in a different color from that of the primary error code. The printing section 37 prints the measurement list on paper together with the primary error code and the secondary error code. The secondary error code is printed in a different color from that of the primary error code. An input section 34 is used for various input operations for patient ID numbers, sample numbers, examination start command and so on and an input operation for a user instruction necessary for making and updating the error-code association table by the operator.

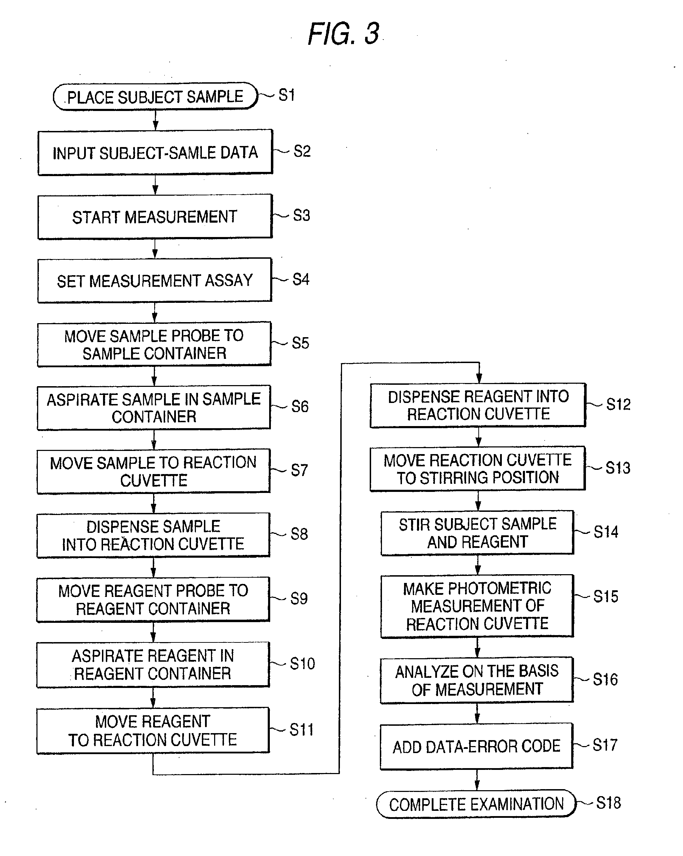

FIG. 3 shows a measuring procedure according to the embodiment. Prior to measurement, the operator places the sample container 4 containing a sample such as blood in a specified position of the sample disk 3(Step S1). After the data on a patient ID number or a sample number has been inputted in the input section 34, a measurement-start command is inputted (steps S2 to S3). The CPU 36 receives the data, reads out measurement assays necessary for the sample from the memory 35 (step S4), and sends mechanism control data to the sample-section-mechanism control circuit 41, the reaction-section-mechanism control circuit 42, and the reagent-section-mechanism control circuit 43.

The sample-section-mechanism control circuit 41 sends a control signal to the sample-disk mechanism 44 in accordance with the instruction of the CPU 36. The sample-disk mechanism 44 controls the rotation of the sample disk 3 in accordance with the signal so that the sample container 4 is placed in position. The sample arm 5 is arranged in the neighborhood of the sample disk 3 and the reaction disk 11. The sample probe 6 is mounted to the end of the sample arm 5.

The sample-section-mechanism control circuit 41 sends a control signal to the sample-arm mechanism 45 and the sample-probe mechanism 46. The sample-arm mechanism 45 pivots the sample arm 5 in accordance with the signal to move the sample probe 6 mounted to the end thereof to the sample container 4 placed in the sample disk 3 (step S5). The sample-arm mechanism 45 moves down the sample probe 6 into the sample container 4 and moves it up after aspirating the sample by a specified amount (step S6). The aspiration of the sample is made by the sample-probe mechanism 46.

Upon completion of the elevation of the sample probe 6, the sample-arm mechanism 45 pivots the sample arm 5 to move the sample probe 6 to a sample dispensing position of the reaction disk 11 and moves down the sample probe 6 into the reaction cuvette 12 placed therein (step S7). The sample-probe mechanism 46 then dispenses the sample by a preset amount into the reaction cuvette 12 (step S8) using the sample probe 6.

Upon completion of the dispensing of the sample, the process shifts to a reagent-dispensing operation. The reagent storage 7 of the reagent section 2 has the circumferential reagent containers 8 each containing a preset reagent corresponding to the sample measurement assay. The reagent-section-mechanism control circuit 43 controls the rotation so that the reagent arms 9-1 and 9-2 move to the reagent container 8 designated by the CPU 36 of the reagent containers 8 set in the reagent storage 7.

The first reagent arm 9-1 and the second reagent arm 9-2 disposed in the neighborhood of the reagent storage 7 have the reagent probes 10-1 and 10-2 at the respective ends. The reagent-section-mechanism control circuit 43 moves the reagent probes 10-1 and 10-2 to the reagent container 8 disposed in a specified position of the reagent storage 7 using the two reagent arms 9-1 and 9-2 (step S9).

Subsequently, the reagent probe 10 moves down into the reagent container 8, aspirates a specified amount of reagent (step S10), and then moves up. After completion of the elevation of the reagent probe 10, the reagent probe 10 is moved to the reaction cuvette 12 placed in a specified position of the reaction disk 11 by the pivot of the reagent arm 9 (step S11), and the reagent is dispensed into the reaction cuvette 12 by a preset amount (step S12). The aspiration in the reagent container 8 and the dispensing to the reaction cuvette 12 are made by the reagent-probe mechanism 52.

Next, the reaction-section-mechanism control circuit 42 performs a rotating operation using the reaction-disk mechanism 48 to move the reaction cuvette 12 in which the sample and the reagent are dispensed to a stirring position (step S13). The reaction-section-mechanism control circuit 42 moves down the stirring device 13 disposed in the vicinity of the outer periphery of the reaction disk 11 by using the stirring mechanism 47 and stirs the mixture of the sample and the reagent in the reaction cuvette 12 with the stirrers mounted to the end thereof (step S14). At that time, the reaction cuvette 12 is kept in a preset temperature with a constant-temperature control circuit (not shown).

Upon completion of the reaction of the sample and the reagent by stirring, the photometer section 14 of the reaction disk 11 irradiates the reaction cuvette 12 arranged in a photometer position of the reaction disk 11 with the light from the light-emitting section 61 in accordance with the instruction signal from the CPU 36 and measures the intensity of transmitted light to determine the amount of change of the sample in the reaction cuvette 12 due to the reagent (step S15). The measurement is converted to a digital signal by an A/D converter (not shown) of the photometer section 14 and then sent to the CPU 36. The CPU 36 reads the value and sends it to the analyzer 32. The analyzer 32 performs a quantitative componential analysis of the sample on the basis of the measurement (step S16).

The analyzer 32 adds a data error code to the value of the componential analysis by the later-described method as necessary. The CPU 36 reads out the results from the analyzer 32 and temporarily stores them in the memory 35 (step S17).

The reaction-section-mechanism control circuit 42 continuously rotates the reaction disk 11 to move the reaction cuvette 12 that was used for the examination in a predetermined cleaning position. The cleaning unit 15 disposed in the cleaning position cleans and dries the reaction cuvette 12 with a cleaning nozzle and a drying nozzle, respectively; thus, the examination for one assay is completed (step S18).

In examining multiple assays, the operations of sample dispensing, reagent dispensing, stirring and reaction, and measuring are repeated in accordance with the foregoing procedure and the obtained measurements (measured values) are sequentially sent to the analyzer 32. The data-error-code adding procedure shown in step S17 will be specifically described later.

The photometer section 14 and the analyzer 32 for performing a componential analysis and adding a data error code on the basis of the measurement by the photometer section 14 will now be described. FIG. 4 is a block diagram of a spectrophotometer used in the photometer section 14, which includes the light-emitting section 61, the spectroscope 63, the photoreceiver 64, and the signal processor 65.

Light from the light-emitting section 61 constructed of a halogen lamp is applied to the sample 62. When the light passes through the sample 62, light of a specified wavelength is absorbed, which is a so-called light absorption phenomenon, by the change such as chemical reaction. The transmitted light is dispersed by the spectroscope 63 and a change in the intensity of light of a specified wavelength is measured by the photoreceiver 64. Accordingly, the condition of the sample 62 can be quantitatively grasped by determining the ratio (transmission percent) of the intensity of the incident light on the sample to the intensity of the transmitted light for the light of a specified wavelength.

The light that has passed through the sample 62 is converted to an electric signal by the photoreceiver 64 and amplified and A/D converted by the signal processor 65. The CPU 36 sequentially reads out the values of the transmitted light having a specified wavelength and sends them to the analyzer 32. The analyzer 32 calculates the transmittance and absorbance by wavelength on the basis of the sent intensity I(λ) of the transmitted light and the intensity I₀(λ) obtained with no sample being present. The CPU 36 temporarily stores the measurements in the memory 35. The recorded assays include (1) a measurement assay name, (2) measurement, and a data error code.

Factors play a role in causing the data error of the automatic analyzer. An aspiration anomaly of a sampling probe will be described as an example.

Of the samples taken from a patient, blood is rarely measured as it is (i.e., initial blood), from which only serum is generally separated by a centrifugal separator to be used as a sample. When the serum is quantitatively aspirated or quantitatively dispensed using the sample probe 6, impurities are sometimes eluted because of extremely high viscosity of the serum due to the morbid condition, insufficient centrifugation and so on. In this case, the sample probe 6 tends to be clogged with clots and so on, making it impossible to aspirate an accurate amount of samples and thus exerting a great influence on the measurement to significantly decrease the reliability of the measurement.

The method for sensing the clogging includes a method of monitoring a change in aspiration pressure during a aspirating operation (hereinafter, referred to as a sampling monitoring method). FIG. 5 shows the configuration of the sampling monitoring method, which includes a pressure sensor 16 arranged in the intermediate of a tube that connects the sample-probe mechanism 46 having a sampling pump with the sample probe 6, for sensing the pressure in the tupe. When the sample in the sample container 4 is aspirated by the sample probe, the pressure sensor 16 senses the pressure in the tube and converts the value from analog to digital. The CPU 36 reads the pressure converted to a digital signal and determines whether the aspirating operation is normal, wherein when anything is wrong with the aspirating operation, it adds a data-error code indicative of an aspiration anomaly to the obtained measurement.

A method for sensing the aspiration anomaly of the sample probe has been described above. In addition, it is also possible to monitor the assays that influence the measurement using various sensors, such as the temperature of the reagent storage 7, the remaining amount of the sample and the reagent, the supply condition of the pure water used for cleaning, the remaining amount of the detergent, and the temperature of constant-temperature water in which the reaction cuvette is immersed. For example, when the temperature of the reaction cuvette is greatly different from a set temperature (37°C), the measurement is significantly influenced and when the temperature of the reagent storage 7 is not kept lower than a set temperature (e.g., 10°C), problems occur.

The operating condition of a motor which may cause a stirring failure is also sensed by a dedicated sensor, the result is sent to the CPU 36 through an interface to check the presence of an anomaly. The high viscosity of the solution (the sample and the reagent) which was taken up as a cause of the aspiration anomaly of the sample probe may also become a cause of the stirring failure.

A lamp used in the light-emitting section 61 of FIG. 4 has an operating life, and when it is used after the operating life, the intensity of light will be reduced and fluctuated, which may cause a measurement error. Therefore, a primary or secondary error code for the expiration of the operating life of the lamp is associated with the measurement using the lamp that is past a preset operating life. The same is applied to the primary or secondary error code association to the measurement for the reagent expiration and the probe. It is necessary to monitor the operating time of the repeatedly used components, expendables, and the reagents. When they have expired, it is preferable to make primary or secondary error-code association.

Specific examples of anomalies during the measuring process according to the embodiment have been briefly described. Setting basis of the primary or secondary error-code association will now be described.

FIG. 6 shows the relation between measurement assays and error causes (kinds of anomalies). The table of FIG. 6 is formed on the basis of the probabilities that anomalies that have occurred while one sample undergoes a measuring process corresponding to a measurement assay T3 cause an error in the measurement of other measurement assays.

For example, when the aspiration anomaly of the sample probe 6 is detected during the measuring process of the measurement assay T3 because of the reasons described in FIG. 5, the common problems will arise in other measurements using the same sample because the aspiration anomaly is caused by the sample itself. Therefore, with the measurement of the measurement assay T3 in which an anomaly was actually detected, a primary error code "C" is associated and, with the measurement of other measurement assays that may contain an error related to the error, a secondary error code "c" is associated. In this case, two kinds of error codes, i.e., a primary error code and a secondary error code, are selectively associated with the measurement assays so that the measurement assay in which an anomaly occurred actually and the measurement assay in which an error may occur in relation to the anomaly are distinguished from each other. The primary error code is indicated in an upper-case "C", while the secondary error code is indicated in a lower-case "c" for discrimination.

When the anomaly of reagent degradation has occurred during the measuring process of the measurement assay T3, a primary error code "F" is associated with only the measurement of the measurement assay T3 when the reagent is used only during the measuring process of the measurement assay T3. There is no measurement with which a secondary error code "f" is associated.

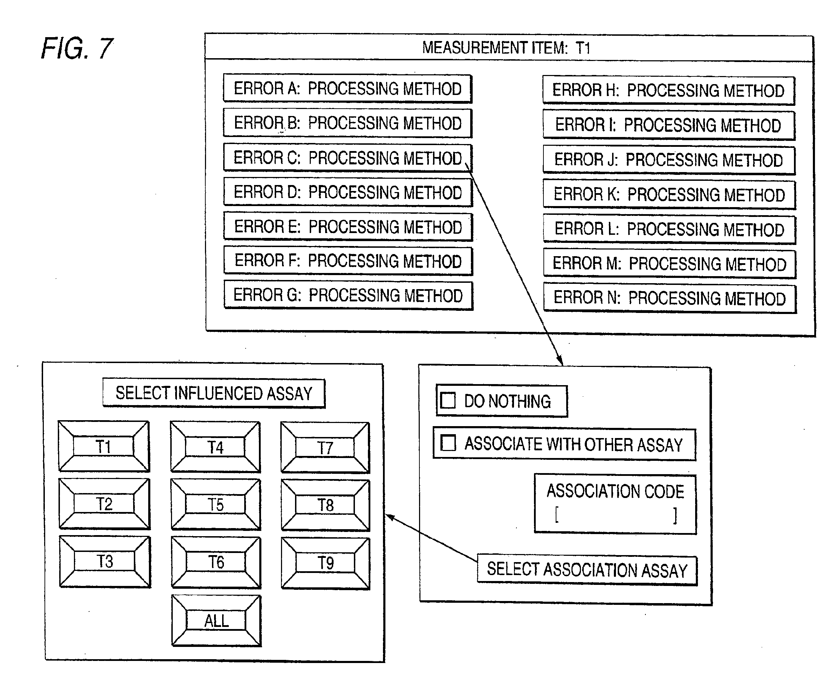

FIG. 7 shows a graphical user interface provided by the CPU 36 when the error-code association table is made or updated. For example, when an operator inputs a table makeup command to the input section 34, the CPU 36 which has received the command displays the input screen of FIG. 7 on the display 38. The operator then clicks on, for example, the "insufficient aspiration" of the anomaly (primary error code C) with the mouse of the input section 34 to display the next input screen. The operator clicks on "association with other assays" to select it, sets a secondary error code to be associated with to "c," and thereafter clicks on an association-measurement-assay selection button. The assay to be influenced or "ALL" that indicates selection of all the assays is selected for the next display screen with the click of a mouse.

On the other hand, when the primary error code "F" that indicates the anomaly of "reagent degradation" is clicked on, "do noting" is selected with a click to complete the input operation. The operation is made for all kinds of anomalies and all the measurement assays, so that the table shown in FIG. 6 is made and stored in the memory 35.

While it has been described that a sample is quantitatively analyzed for each of the multiple measurement assays and diagnosed from the measurements, the method for associating error codes with the multiple measurement assays based on the above-described table will be described hereinafter.

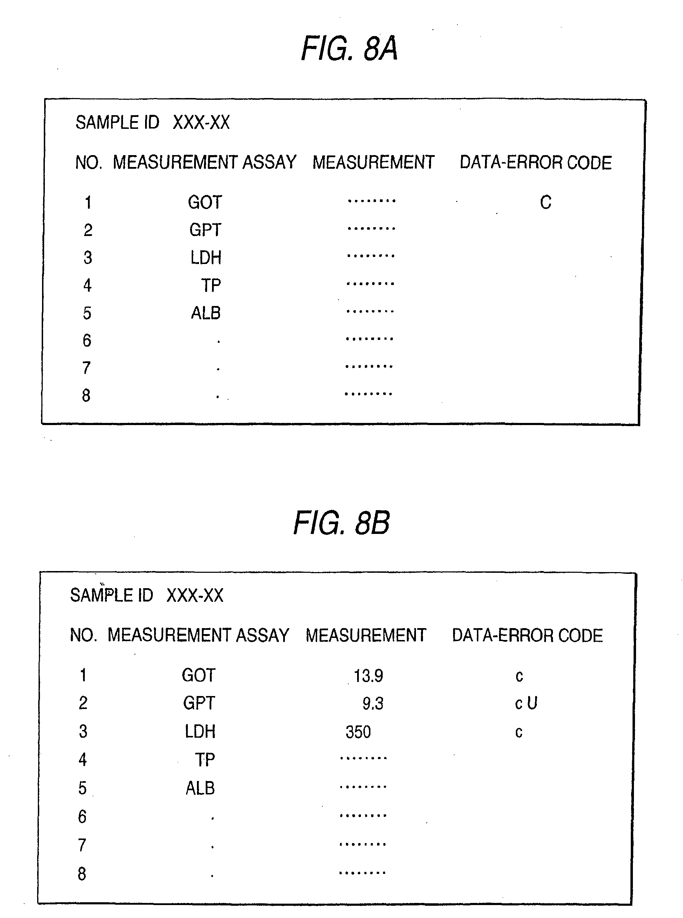

FIGS. 8A and 8B show display examples of a measurement list. For example, it shows that the identical sample undergoes measuring processes in sequence for a measurement assay T1 (glutamic oxaloacetic transaminase: GOT), a measurement assay T2 (glutamic pyruvic transaminase: GPT), a measurement assay T3 (serum lactic dehydrogenase: LDH), a measurement assay T4 (total protein: TP),

and a measurement assay T5 (albumin: ALB). In the measurements, absorbances in a predetermined wavelength are stored in the memory 35.
FIG. 8A shows the case in which an aspiration anomaly was found in the initial GOT examination from the information of the pressure sensor 16, the measurement of which is given the primary error code "C" of an aspiration anomaly. It is apparent that the aspiration anomaly is mainly caused by the properties (viscosity and inclusion of impurities) of the sample. Thus, since there is a problem in the reliability of the examinations subsequent to the GPT, which uses the same sample, the examination is immediately stopped.
FIG. 8B shows the case in which an anomaly in aspiration pressure was not particularly detected in the examinations of GOT and GPT but was detected first in the third examination of LDH. The measurement of the LDH is given the primary error code "C." In addition to that the examinations subsequent to TP are stopped, the measurements of GOT and GPT are given the secondary error code "c."

Since the measurement of GPT in FIG. 8B exhibits an abnormal value, which is determined to be out of a normal range by a range check, a third error code "U" indicative of data abnormality, which is neither the primary error code nor the secondary error code, is added to the measurement of the GPT. It is not clear at that stage whether the abnormal value is caused by the morbid condition or the anomaly of the reagent and the like. However, when there is no data error information from the various sensors in the device, it may be a data error specific to the measurement assay. Therefore, the error code "U" is added only to this measurement assay.

The error code "C" or "U" is associated with only an assay in which a measuring-process anomaly or a data abnormal value was detected. Therefore, it was difficult to find the cause of the error code "U" of the GPT. According to the embodiment, however, since the GPT is given the secondary error code "c," the operator can easily know the probability of clogging of the sample. Thus, the operator can estimate that the error code "U" is caused by the clogging of the sample, thus having the advantage of facilitating the determination on whether to make reexamination. To "reexamine" the assay automatically, giving the indication of "reexamination" to the error code "c" allows automatic reexamination, thus reducing an error and complicatedness of operation.

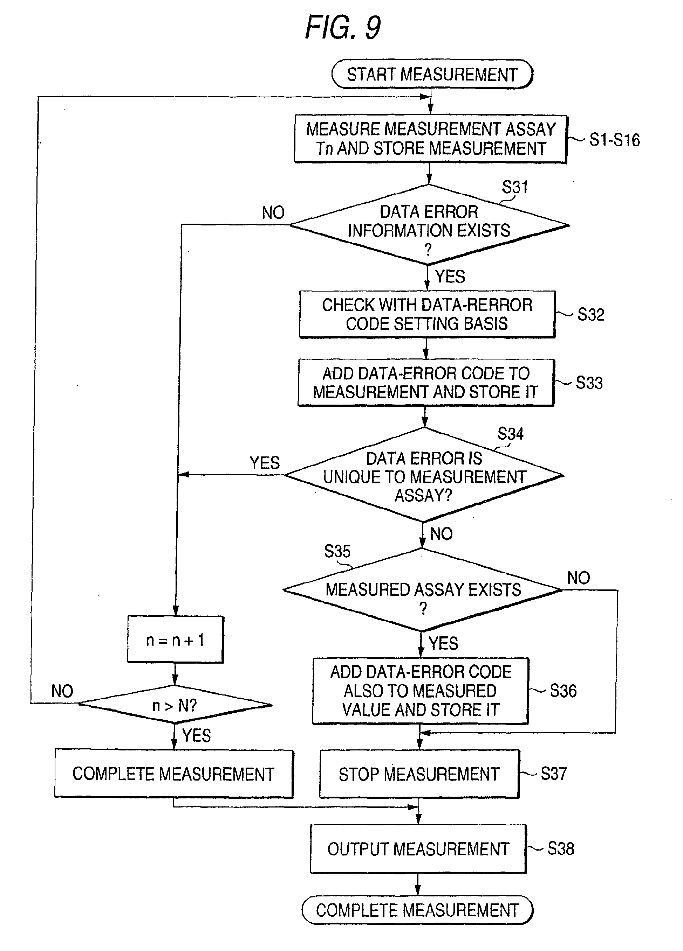

The procedure of associating the error codes will be described with reference to the flowchart of FIG. 9. FIG. 9 shows the procedure for N measurement assays of T1 to TN. At the point in time when the measurement of the measurement assay Tn is obtained in the steps S1 to S16 of the measuring-procedure flowchart of FIG. 3, the CPU 36 determines on the basis of the stored anomaly data whether an anomaly detection signal has been generated from one of the sensors 39 which corresponds to the kind of the anomaly or its measuring step, wherein when no anomaly detection signal has been outputted, the process shifts to the measurement of the next measurement assay Tₙ₊₁. On the other hand, when an anomaly detection signal was detected, the CPU 36 determines the kind of the anomaly, in other words, from which sensor 39 in the measuring step the signal was outputted (step 31).

The CPU 36 then checks the kind of the anomaly (or the measuring step) against the table that has previously been stored in the memory 55 and determines the kind of the primary error code (step S32). The CPU 36 also reads the measurement of the examination assay Tn stored in the memory 35 and associates it with the primary error code "C" corresponding to the kind of the anomaly (or the measuring step in which the anomaly occurred) (step S33).

The CPU 36 then determines whether the anomaly is limited to the measuring step of the measurement assay Tn on the basis of the error-code association table (step S34), wherein when there is no measurement assay with which the secondary error code is associated, the process shifts to the measurement of the next measurement assay Tₙ₊₁.

On the other hand, when the anomaly affects the measurements of other measurement assays, it is determined whether the measurement assay with which the secondary error code is associated in the table has been executed before the measurement assay Tn (step S35), wherein when it is NO, the measurement is stopped (step S37). Conversely, it is YES, the secondary error code "c" is associated with a specific measurement stored in the data memory 35, which is stored again in the memory 35 (step S36), and measurement is stopped (step S37).

Accordingly, the measurement is stopped at the point in time when it is determined from the table that the detected anomaly affects the measuring steps of other measurement assays, i.e., there is a measurement assay to be associated with the secondary error code for the detected anomaly. On the other hand, when there is no measurement assay to be associated with the secondary error code for the detected anomaly, the measurement is continued.

The determination as to whether to stop or continue the measurement may be made more specifically on the basis of the content of the error. For example, when the anomaly is caused by the clogging of the probe during the aspiration or discharge of a sample, the measurement is stopped at the point in time when the anomaly was detected, because the subsequent measurement in not necessary.

For example, in the measurement of two measurement assays (A and B) in which the first reagent is commonly used, when a little anomaly is detected in the reaction absorbance data after the addition of the first reagent and a primary error code is associated with the measurement of the assay A, a secondary error code is associated with the measurement of the other assay B in which no anomaly was detected during the measuring step because the assays A and B share the common reagent. Accordingly, the operator can recognize the connection between the anomalies including the degradation of the common reagent (first reagent) used in measurement and the measurement. Since the anomalies have no influence on the other measurement assays, the measurement may be continued. Thus, it is sometimes more efficient not to stop but to continue the measurement depending on the cause of the error.

Upon completion or interruption of the measurement, the CPU 36 reads the measurements of the measurement assays T1 to Tn stored in the memory circuit 35 and primary error codes associated therewith and outputs them in the display 38 or the printing section 37 (step S38).

When the measurement is stopped, there is no measurement of the assays to be measured after the interruption. In this case, a fourth error code indicative of the interruption of measurement is associated with the remaining measurement assays after the interruption so that the operator is notified of the reason why there is no measurement. The error code at that time is different depending on the cause of the interruption. The operator can thus understand the interruption of the measurement and its cause.

A summary of the procedure is shown below. The memory 55 stores a predetermined table for anomalies that occur during the measuring process. When one anomaly has been detected, the CPU 36 determines whether the cause of the anomaly affects the other measurement assays on the basis of the table in the memory 55. With the other measurement assays affected by the cause of the anomaly, the secondary error code is retroactively associated even if the measurements have already been obtained.

In this case, as shown in FIG. 8B, in order to clearly show a measurement assay in which an aspiration anomaly has actually occurred, an uppercase letter "C" is associated with the assay, while a lowercase letter "c" is associated with the other measurement assays that may be affected by the aspiration anomaly. In this way, they are distinguished from each other.

Referring to FIG. 8B, when no sampling-probe aspiration anomaly was detected during the LDH measuring process, the remaining measurement assays may be improved by reexamination. Therefore, after the cause has been eliminated, reexamination is made.

Similarly, when the primary error code "C" is associated with the measurement of LDH, the sample is taken from the sample disk 3, which undergoes elimination of impurities and dilution by a visual examination, and then reexamination is made.

In this way, the primary error code is associated with the measurement obtained in the measuring process in which an anomaly was detected, while the secondary error code is associated with the measurement that may have an error in spite of the fact that no error was detected. Thus, when a sample contains a factor that significantly decreases measuring accuracy, the use of the two different error codes prevents an error code for the measurement assay of the sample from being omitted, thus allowing complete reconfirmation and reexamination of the sample.

According to the embodiment, in other words, when one anomaly occurred, an error code (secondary error code) is associated with the measurement of the other measurement assays which may be affected by the anomaly. Thus, a warning can be given to an examination result that has erroneously been recognized to be correct and might cause a wrong diagnosis. Consequently, this greatly increases the reliability of an examination result obtained by the automatic analyzer.

Past measurement (measurement history) for the sample of the identical analyte is stored in the memory circuit of the device and the measurement is compared with the newly obtained measurement. Accordingly, the credibility of the measurement data can be checked. Specifically, when the difference thereof exceeds a specified value, there is a high probability of the occurrence of a data error, which may be associated with the examination result as a fifth error code. This provides valuable information for promoting reexamination.

When anomalies have occurred during the measuring operation of the device, such as the clogging of the probe during aspiration or discharge halfway through the measuring process (during measurement), a primary error code or a secondary error code may automatically be associated with the measurement assays during the measuring process and the other measurement assay before the measurement is given or even after the measurement has been given. This allows a measurement error to be discriminated in real time, thus allowing a quick response to reexamination.

### Industrial Applicability

According to the present invention, the control accuracy of the error of the measurement can be improved.

## Claims

1. An automatic analyzer, comprising:
means for measuring (30) a reaction between samples taken from an analyser that is divided into reaction cuvettes (12) and reagents;
means (39) for detecting a measurement error arising during the measurement of a reaction; and
means (53) for adding a primary error identification code to a measurement assay or a measurement in which the measurement error is detected, **characterised in that** the automatic analyser further comprises means for determining from the type of detected measurement error whether the detected measurement error is limited to the measurement assay or measurement where the error was detected or whether the measurement error affects other measurement assays or measurements, the said means (53) being further configured to add a secondary error identification code to the other measurement assays or measurements which have been determined as affected from the type of detected measurement error.

2. An automatic analyser according to claim 1, wherein the primary error code indicates that an error is contained with a relatively high probability because of the error and the secondary error code indicates that an error is contained with a relatively low probability because of the error.

3. An automatic analyser according to claim 1, wherein the primary error code and the secondary error code each indicate the kind of the error.

4. An automatic analyser according to claim 1, wherein the measuring process for generating the measurement with which the secondary error code is associated comprises at least one measuring step common to the measuring process for generating the measurement with which the primary error code is associated.

5. An automatic analyser according to claim 1, wherein the secondary-error-code associating section selects the measurement with which the secondary error code is associated on the basis of the kind of the anomaly.

6. An automatic analyser according to claim 1, further comprising a memory (55) for storing a correspondence table for the kind of the error and the measurement assay or measurement with which the secondary error code is associated.

7. An automatic analyser according to claim 6, wherein the secondary-error-code associating section selects the measurement with which the secondary error code is associated in accordance with the correspondence table.

8. An automatic analyser according to claim 7, further comprising means for updating the correspondence table in accordance with a user instruction.

9. An automatic analyser according to claim 1, further comprising at least one of a display for displaying the measurement together with the primary error code and the secondary error code and a printing section for printing the measurement together with the primary error code and the secondary error code.

10. An automatic analyser according to claim 9, wherein the primary error code is displayed or printed in a color different from that of the secondary error code.

## Patentansprüche

1. Automatische Analysevorrichtung, enthaltend:
ein Mittel zum Messen (30) einer Reaktion zwischen Proben, die von einem Messgerät genommen werden, das unterteilt ist in Reaktionsküvetten (12) und Reagenzien;
ein Mittel (39) zum Detektieren eines Messfehlers, der während der Messung einer Reaktion auftritt; und
ein Mittel (53) zum Hinzufügen eines Primärfehleridentifikationscodes zu einer Messprobe oder einer Messung, in der der Messfehler detektiert wird, **dadurch gekennzeichnet, dass** die automatische Analysevorrichtung ferner enthält:
ein Mittel zum Bestimmen, aus dem Typ des detektierten Messfehlers, ob der detektierte Messfehler auf die Messprobe oder die Messung beschränkt ist, wo der Fehler detektiert worden ist, oder ob der Messfehler andere Messproben oder Messungen beeinträchtigt, wobei das Mittel (53) ferner konfiguriert ist zum Hinzufügen eines Sekundärfehleridenzifikationscodes zu den anderen Messproben oder Messungen, für die bestimmt worden ist, dass sie von dem Typ des detektierten Messfehlers beeinträchtigt sind.

2. Automatische Analysevorrichtung nach Anspruch 1, bei der der Primärfehlercode angibt, dass ein Fehler mit einer relativ hohen Wahrscheinlichkeit infolge des Fehlers vorhanden ist, und der Sekundärfehlercode angibt, dass ein Fehler mit relativ geringer Wahrscheinlichkeit infolge des Fehlers vorhanden ist.

3. Automatische Analysevorrichtung nach Anspruch 1, bei der der Primärfehlercode und der Sekundärfeblercode jeweils die Art des Fehlers angeben.

4. Automatische Analysevorrichtung nach Anspruch 1, bei der der Messprozess zum Erzeugen der Messung, zu der der Sekundärfehlercode gehört, mindestens einen Messschritt enthält, der dem Messprozess zum Erzeugen der Messung, zu dem der Primärfehlercode gehört, gemeinsam ist.

5. Automatische Analysevorrichtung nach Anspruch 1, bei der der zu dem Sekundärfehlercode gehörige Abschnitt die Messung auswählt, zu der der Sekundärfehlercode gehört, basierend auf der Art der Abweichung.

6. Automatische Analysevorrichtung nach Anspruch 1, ferner enthaltend einen Speicher (55) zum Speichern einer Korrespondenztabelle für die Art des Fehlers und die Messprobe oder Messung, zu der der Sekundärfehlercode gehört.

7. Automatische Analysevorrichtung nach Anspruch 6, bei der der zu dem Sekundärfehlercode gehörige Abschnitt die Messung auswählt, zu dem der Sekundärfehlercode gehört, gemäß der Korrespondenztabelle.

8. Automatische Analysevorrichtung nach Anspruch 7, ferner enthaltend ein Wittel zum Aktualisieren der Korrespondenztabelle gemäß einer Benutzeranweisung.

9. Automatische Analysevorrichtung nach Anspruch 1, ferner enthaltend mindestens eine Auzeige zum Anzeigen der Messung zusammen mit dem Primärfehlercode und dem Sekundärfehlercode, und/oder einen Druckabschnitt zum Drucken der Messung zusammen mit dem Primärfehlercode und dem Sekundärfehlercode.

10. Automatische Analysevorrichtung nach Anspruch 9, bei der der Primärfehlercode angezeigt oder gedruckt wird in einer Farbe, die von der des Sekundärfehlercodes verschieden ist.

## Revendications

1. Analyseur automatique, comprenant :
des moyens pour mesurer (30) une réaction entre des échantillons pris à partir d'un analyseur qui est divisé en cuvettes de réaction (12) et des réactifs ;
des moyens (39) pour détecter une erreur de mesure survenant pendant la mesure d'une réaction ; et
des moyens (53) pour ajouter un code d'identification d'erreur principal à un essai de mesure ou à une mesure dans lequel l'erreur de mesure est détectée, **caractérisé en ce que** l'analyseur automatique comprend en outre des moyens pour déterminer, à partir du type d'erreur de mesure détectée, si l'erreur de mesure détectée est limitée à l'essai de mesure ou à la mesure dans lequel l'erreur a été détectée ou si l'erreur de mesure affecte d'autres essais de mesure ou d'autres mesures, lesdits moyens (53) étant en outre configurés pour ajouter un code d'identification d'erreur secondaire aux autres essais de mesure ou aux autres mesures qui ont été déterminés comme étant affectés par le type d'erreur de mesure détectée.

2. Analyseur automatique selon la revendication 1, dans lequel le code d'erreur principal indique qu'une erreur est contenue avec une probabilité relativement élevée à cause de l'erreur et le code d'erreur secondaire indique qu'une erreur est contenue avec une probabilité relativement faible à cause de l'erreur.

3. Analyseur automatique selon la revendication 1, dans lequel le code d'erreur principal et le code d'erreur secondaire indiquent chacun le type de l'erreur.

4. Analyseur automatique selon la revendication 1, dans lequel le processus de mesure pour générer la mesure à laquelle le code d'erreur secondaire est associé comprend au moins une étape de mesure commune au processus de mesure pour générer la mesure à laquelle le code d'erreur principal est associé.

5. Analyseur automatique selon la revendication 1, dans lequel la section d'association de code d'erreur secondaire sélectionne la mesure à laquelle le code d'erreur secondaire est associé sur la base du type de l'anomalie.

6. Analyseur automatique selon la revendication 1, comprenant en outre une mémoire (55) pour mémoriser une table de correspondance pour le type de l'erreur et l'essai de mesure ou la mesure auquel le code d'erreur secondaire est associé.

7. Analyseur automatique selon la revendication 6, dans lequel la section d'association de code d'erreur secondaire sélectionne la mesure à laquelle le code d'erreur secondaire est associé conformément à la table de correspondance.

8. Analyseur automatique selon la revendication 7, comprenant en outre des moyens pour mettre à jour la table de correspondance conformément à une instruction d'utilisateur.

9. Analyseur automatique selon la revendication 1, comprenant en outre au moins l'un d'un afficheur pour afficher la mesure avec le code d'erreur principal et le code d'erreur secondaire et une section d'impression pour imprimer la mesure avec le code d'erreur principal et le code d'erreur secondaire.

10. Analyseur automatique selon la revendication 9, dans lequel le code d'erreur principal est affiché ou imprimé dans une couleur différente de celle du code d'erreur secondaire.
